# EUROPEAN PATENT APPLICATION

(11) **EP 2 312 526 A2**
(43) Date of publication of application: **20.04.2011**
(21) Application number: 10182146.0
(22) Date of filing: 29.09.2010
(51) Int. Cl.: G06T 5/50

(54) **Process and apparatus for image processing and computer-readable medium storing image processing program**

(30) Priority: 01.10.2009 JP 2009229182
(71) Applicant: FUJITSU LIMITED, Kawasaki-shi, Kanagawa 211-8588 (JP)
(72) Inventor: Yamamoto, Tsuyoshi, Kawasaki-shi Kanagawa 211-8588 (JP)
(74) Representative: Wilding, Frances Ward

(57) **Abstract**

In an apparatus for image processing realized by a computer executing an image processing program: an image generation unit generates, for a radiographic image of a structure constituted by a plurality of members being stacked and including an object to be examined, a density-correction image representing an influence of a transmission density of each of the plurality of members other than the object to be examined, on the basis of structure information on the plurality of members; and a removal unit removes the influence of the transmission density of each of the plurality of members other than the object to be examined, from at least a part of the radiographic image in which images of the plurality of members overlap, by using the density-correction image generated by the image generation unit.

## Description

### FIELD

The embodiments discussed herein relate to a process and an apparatus for image processing and a computer-readable medium storing an image processing program.

### BACKGROUND

The radiographic (X-ray) test is known as a technique for verification of the quality of solder-bonded portions of component-mounted printed (circuit) boards and the like (in which electronic components are solder mounted on printed boards). In the radiographic test, X-rays are projected to the solder-bonded portions, and the existence or absence of a void in the solder is determined on the basis of a radiographic image produced by transmitted X-rays. It is possible to regard each printed board as defective when the printed board contains a void producing an image having at least a predetermined area. For example, the radiographic Lest is used for examination of solder-bonded portions of BGAs (Ball Grid Arrays) and the like, which are difficult to visually examine. According to a known technique for determining the existence or absence of a void, the density of the radiography is represented by gray-scale values, and the void is detected by thresholding, by which the gray-scale image is converted into a binary image. (See, for example, Japanese Laid-open Patent Publication No. 2001-12932 and International Patent Application WO99/52072.)

Since the solder-bonded portions have been becoming finer in conjunction with the increase in the mounting density in the electronic devices, and use of the lead-free solder (i.e., the solder not containing lead as a heavy metal) has been spreading, the differences in the transmission density between solder-bonded portions of component-mounted printed boards and the backgrounds tend to decrease, and the void detection rate tends to decrease because the contrast of the radiographic image decreases.

Because the thickness of the solder is small at the fine solder-bonded portions of the component-mounted printed boards, the densities of the solder-bonded portions in radiographs are low, so that the differences in the thickness between the solder-bonded portions and the other metallic portions (e.g., the electrodes) of the printed boards and the electronic components are small. Therefore, in some cases where an image of a void in a solder-bonded portion is superimposed, in a radiograph, on a density change corresponding to an internal structure of a metallic portion of a printed board or an electronic component, the void may not be able to be detected by the aforementioned thresholding.

In particular, the printed boards in EGA type electronic parts having a fine-pitch WLCSP (Wafer Level Chip Scale Package) structure or the like may have an electrode structure called the NSMD (Non-solder Mask Defined) structure, or have an inside structure with a copper (Cu) post for buffering stress. In such cases, the density of the radiographic image of the electrodes is superimposed on the radiographic image of the portions bonded with the solder bumps. Therefore, the densities of the images of the solder-bump-bonded portions can be partially changed by the densities of the image of the electrodes. Since the density changes at the circumferences of the electrodes, it is difficult to appropriately detect a void in a solder-bump-bonded portion by thresholding in the case where the position of the void is close, in a radiograph image, to a circumference of an electrode (e.g., a Cu post or an NSMD land in a WLCSP structure). Although the above explanations are given with reference to the example of the WLCSP structure, similar problems can also occur in void detection in other semiconductor chips having solder-bonded portions.

### SUMMARY

It is therefore considered desirable to provide a process and an apparatus for image processing which can suppress errors in void detection, and it is also considered desirable to provide a computer-readable medium storing an image processing program which can suppress errors in void detection.

According to an aspect of the present invention, a computer-readable medium which stores an image processing program to be executed by a computer is provided. The image processing program realizes in the computer: an image generation unit which generates, for a radiographic image of a structure constituted by a plurality of members being stacked and including an object to be examined, a density-correction image representing an influence of a transmission density of each of the plurality of members other than the object to be examined, on the basis of structure information on the plurality of members; and a removal unit which removes the influence of the transmission density of each of the plurality of members other than the object to be examined, from at least a part of the radiographic image in which images of the plurality of members overlap, by using the density-correction image generated by the image generation unit.

The techniques disclosed in this specification may make it possible, or at least help, to generate a radiographic image which can suppress errors in void detection.

### BRIEF DESCRIPTION OF THE DRAWINGS

FIG. 1 is a diagram illustrating an outline of an image processing apparatus according to a first embodiment;
FIG. 2 is a diagram illustrating a configuration of a radiographic testing system according to a second embodiment;
FIG. 3 is a diagram schematically illustrating a solder-bonded terminal structure to be examined;
FIG. 4 is a diagram illustrating a portion of an example of a radiographic image recorded by a radiographic-image data recorder;
FIG. 5 is a diagram illustrating an exemplary hardware construction of the image processing apparatus;
FIG. 6 is a block diagram illustrating the functions of the image processing apparatus;
FIG. 7 is a flow diagram indicating a sequence of processing for generating correction-image information;
FIG. 8 is a flow diagram indicating a sequence of processing from alignment of the density-correction image until void detection;
FIGS. 9A and 9B are diagrams schematically illustrating production of density-correction images in a concrete example;
FIG. 10 is a diagram illustrating an example of density correction in the concrete example;
FIG. 11A is a graph indicating a one-dimensional density distribution along a line passing through a part of a radiographic image 111a corresponding to a void; and
FIG. 11B is a graph indicating a one-dimensional density distribution along a line passing through a part of a radiographic image 24a corresponding to the void.

### DESCRIPTION OF EMBODIMENTS

Preferred embodiments of the present invention will be described below with reference to the accompanying drawings.

### 1. First Embodiment

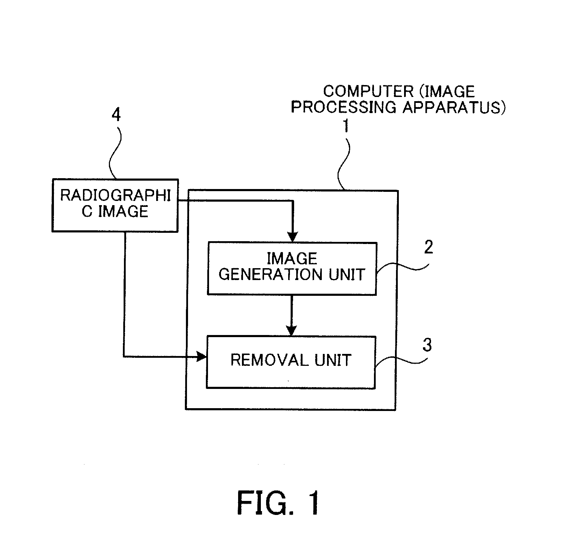

FIG. 1 illustrates an outline of an image processing apparatus according to the first embodiment. The image processing program according to the present embodiment makes a computer 1 operate as an image processing apparatus 1 having an image generation unit 2 and a removal unit 3.

The image generation unit 2 generates, for a radiographic image 4 of a structure constituted by a plurality of members being stacked and including an object to be examined, a density-correction image representing an influence of the transmission density of each of the plurality of members other than the object to be examined, on the basis of structure information on the plurality of members. For example, the object to be examined is a solder bump, the plurality of members may constitute a printed board, and the structure information may include the thicknesses and the material characteristics of the plurality of members.

The transmission density can be obtained by calculation. For example, it is possible to prepare, in advance, data of the transmission density of each material having a unit thickness, and calculate the influence on the transmission density of each member on the basis of the thickness of the member and the prepared data of the transmission density.

For example, in the case where a radiographic image 4 of a structure of first, second, and third members which are stacked is taken, and the first member is the object to be examined, the image generation unit 2 generates, on the basis of the structure information on the second and third members, the transmission density of the second member and the transmission density of the third member in a part of the radiographic image 4 in which the images of the second and third members overlap. Then, the image generation unit 2 generates a density-correction image corresponding to the transmission density of the second member and showing the same shape of the second member as the radiographic image 4, and a density-correction image corresponding to the transmission density of the third member and showing the same shape of the third member as in the radiographic image 4.

However, in the case where the transmission density of one of the plurality of members does not exceed a predetermined threshold, the generation of a density-correction image corresponding to the one of the plurality of members may be dispensed with, so that the processing performed by the image processing apparatus 1 can be simplified.

The removal unit 3 removes the influence of the transmission density of each of the members other than the object to be examined, from the part of the radiographic image 4 in which the images of the first, second, and third members overlap, by using the density-correction image generated by the image generation unit 2. In the example in which an radiographic image 4 of a structure of first, second, and third members which are stacked is taken, and the first member is the object to be examined, the transmission density of the second member and the transmission density of the third member are subtracted from the part of the radiographic image 4 in which the images of the first, second, and third members overlap. At this time, the polarity of the data of the density-correction image corresponding to the second member and the density-correction image corresponding to the third member may be inverted as appropriate.

The operations of the image generation unit 2 may be performed either when the image generation unit 2 is requested by the removal unit 3 to perform the operations or when the radiographic image 4 is taken.

Since the image processing apparatus (computer) 1 having the above functions removes the influence of the transmission density of each member other than the object to be examined, the image formed by the radiographic densities of the object to be examined becomes clearer. For example, when a void exists in a component, the void can be detected with higher reliability.

### 2. Second Embodiment

### 2.1 System Configuration

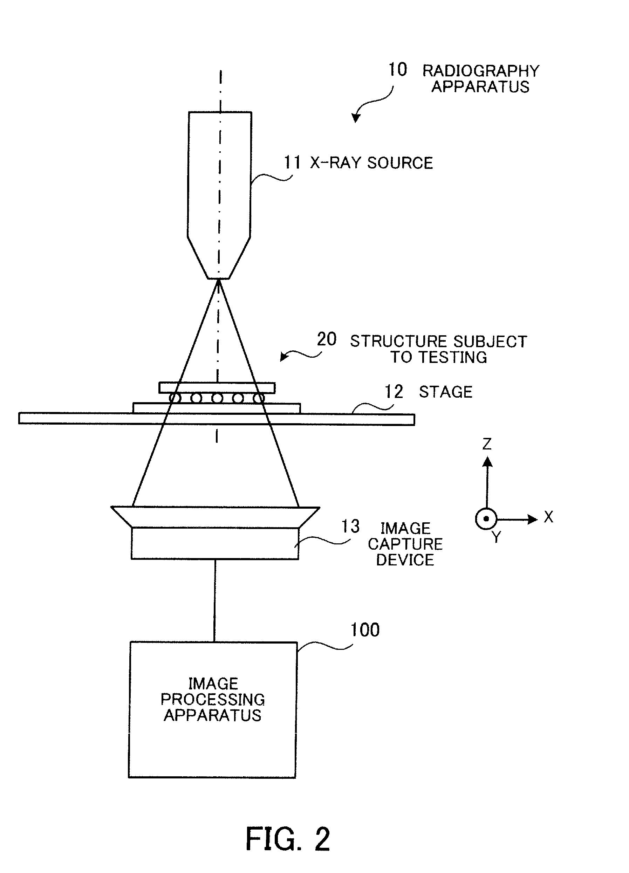

FIG. 2 illustrates a configuration of a radiographic testing system according to the second embodiment. The radiographic testing system of FIG. 2 comprises a radiography apparatus 10 and an image processing apparatus 100.

The radiography apparatus 10 comprises an X-ray source 11, a stage 12, and an image capture device 13. The stage 12 is provided for placing a structure 20 subject to testing, and the image capture device 13 captures a radiographic image. The X-ray source 11 is arranged above the stage 12 so that X-rays are radially emitted downward (in FIG. 2) to irradiate the structure 20 subject to testing. The stage 12 has a horizontal holding face on the upper side, and can be moved independently in horizontal directions (along the X-axis and Y-axis) and a vertical direction (along the Z-axis) and around a rotation axis (e.g., the Z-axis). (That is, the stage 12 can be moved independently in each of the X-, Y-, Z-, and θ-axis directions). The stage 12 can be fixed to an appropriate position. Thus, the positioning control in each direction is possible. In the example illustrated in FIG. 2, the structure 20 subject to testing is a solder-bonded terminal structure in a WLCSP (Wafer Level Chip Scale Package) having a Cu-post type electrode, and is placed on the stage 12. It is possible to configure the radiography apparatus 10 so that a unit radiographic region of the structure 20 subject to testing (placed on the stage 12) is entirely irradiated with X-rays emitted from the X-ray source 11 when the stage 12 is moved along a movement axis. The unit radiographic region is not specifically limited. However, for example, in the case where the structure 20 subject to testing has a rectangular shape as viewed from the X-ray source 11, it is possible to divide the rectangular region into nine unit radiography regions. For example, twenty (4 X 5) solder bumps are arranged in each unit radiographic region of the structure 20 subject to testing.

### 2.2 Solder-bonded Terminal Structure

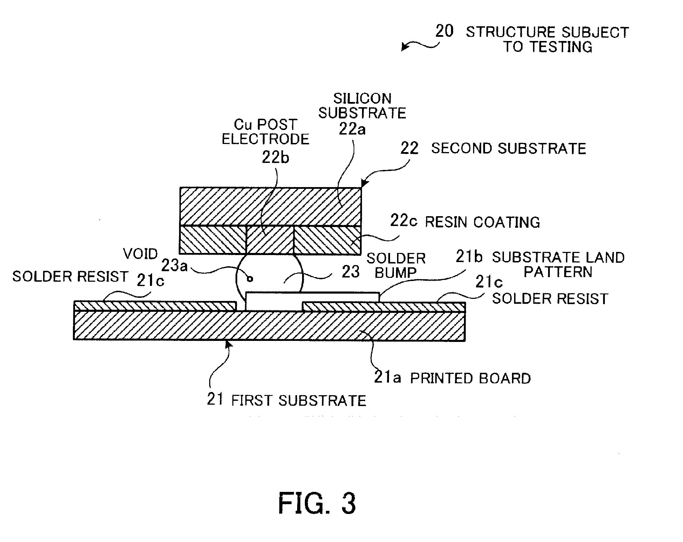

FIG. 3 is a diagram schematically illustrating a solder-bonded terminal structure to be examined. In FIG. 3, only a portion of the structure 20 subject to testing around a solder bump is illustrated. The structure 20 subject to testing includes a first substrate 21 and a second substrate (package body) 22. The first substrate 21 is constituted by a printed board 21a. The printed board 21a is a base of the first substrate 21, and has a planar form. A solder resist 21c and a substrate land pattern 21b are formed on the printed board 21a. The substrate land pattern 21b has a laminar electrode. The second substrate 22 is constituted by a silicon substrate 22a, a Cu post electrode 22b, and a resin coating 22c. The Cu post electrode 22b is formed under the silicon substrate 22a, and coated with the resin coating 22c. The substrate land pattern 21b in the first substrate 21 and the Cu post electrode 22b in the second substrate 22 are electrically connected through a solder bump 23. In the example illustrated in FIG. 3, the solder bump 23 is assumed to contain a void 23a.

### 2.3 Image Capture

Referring back to FIG. 2, the image capture device 13 has, for example, a function of night vision. That is, the image capture device 13 detects very faint light (which is emitted or reflected), and produces an image having high contrast by multiplication or the like of the detected light. In addition, the magnification by projection can be increased and decreased by providing a mechanism for moving the X-ray source 11 and the image capture device 13. Although no specific requirement is imposed on the image capture performance of the image capture device 13, for example, it is preferable that the image capture device 13 can detect the light with a density resolution corresponding to a gray scale of at least 256 gradation levels (represented by eight bits) in the case where the X-ray source 11 is a microfocus type having a focal size of 1 micrometer or smaller. It is more preferable that the image capture device 13 have a digital flat panel so as to realize a gray scale of 4,096 to 65,536 gradation levels (represented by 12 to 16 bits). Thus, it is possible to obtain an image having relative values of the density (or intensity) at the levels used in the radiographic test. For example, the image capture device 13 is an image intensifier.

Further, it is preferable that the radiography apparatus 10 have functions of calibrating the input and the output of the X-ray source 11 and the image capture device 13, and maintaining the condition of the intensity correction (such as the contrast correction and the brightness correction) constant or maintaining the relationships between the densities of materials by managing the conditions of the calibration and correction.

The (radiographic) image of each unit radiographic region captured by the image capture device 13 has a resolution of, for example, 1,024 X 1,024 pixels, is outputted in the form of gray-scale information represented by 8 to 12 bits, and is then displayed on a monitor (explained later) in the image processing apparatus 100. In addition, the captured image can also be recorded in a radiographic-image data recorder (explained later) in the image processing apparatus 100.

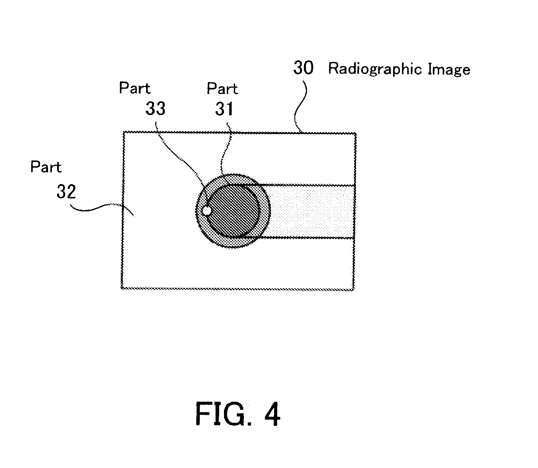

FIG. 4 illustrates a portion of an example of a radiographic image recorded by the radiographic-image data recorder. In the following explanations, the radiographic image represents density by gradation values in a gray scale of 256 levels (represented by eight bits) for simplicity of the explanations, where black is represented by the gradation level "0", and white is represented by the gradation level "255". In FIG. 4, only a portion of a radiographic image 30, around a solder bump, of a solder-bonded terminal structure in a WLCSP is illustrated. The range of gradation values of the radiographic image 30 is adjusted so that the part 31 of the radiographic image 30 corresponding to the solder bump 23 (through which the X-ray transmittance is minimized) has the gradation value of, for example, approximately 40, and the part 32 of the radiographic image 30 (in which no wiring pattern of the printed board 21a exists and through which the X-ray transmittance is large compared with the solder bump 23) has the gradation value of, for example, approximately 230 or greater.

In the case where a void 23a exists in the solder bump 23, an image of the void 23a exists as a part 33 of the radiographic image 30. In FIG. 4, the densities of the parts 31, 32, and 33 of the radiographic image 30 are exaggerated for clear illustration of the part 33.

### 2.4 Operations of Radiographic Testing System

The operations of the radiographic testing system are briefly explained below.

First, the structure 20 subject to testing is positioned in a predetermined field of view by moving the stage 12. Then, the image processing apparatus 100 performs calculation for correction of the radiographic image captured by the radiography apparatus 10, and acquires a corrected radiographic image of which the fundamental quality is improved. The correction of the radiographic image includes, for example, averaging for reducing noise components in the radiographic image. Thereafter, the image processing apparatus 100 records the corrected radiographic image and performs processing for examination and judgment on the corrected radiographic image.

When the image processing apparatus 100 performs the calculation for correction of the radiographic image captured by the radiography apparatus 10, the image processing apparatus 100 prepares, separately from the radiographic image, a density-correction image for partial density correction of a portion of the radiographic image which can impede the examination and judgment, on the basis of the structure information on the structure 20 subject to testing. (The structure information is explained later.) Then, the image processing apparatus 100 removes from the radiographic image the influence of the portion of the structure 20 which can impede the examination and judgment, by using the separately prepared density-correction image.

### 2.5 Hardware Construction of Image Processing Apparatus

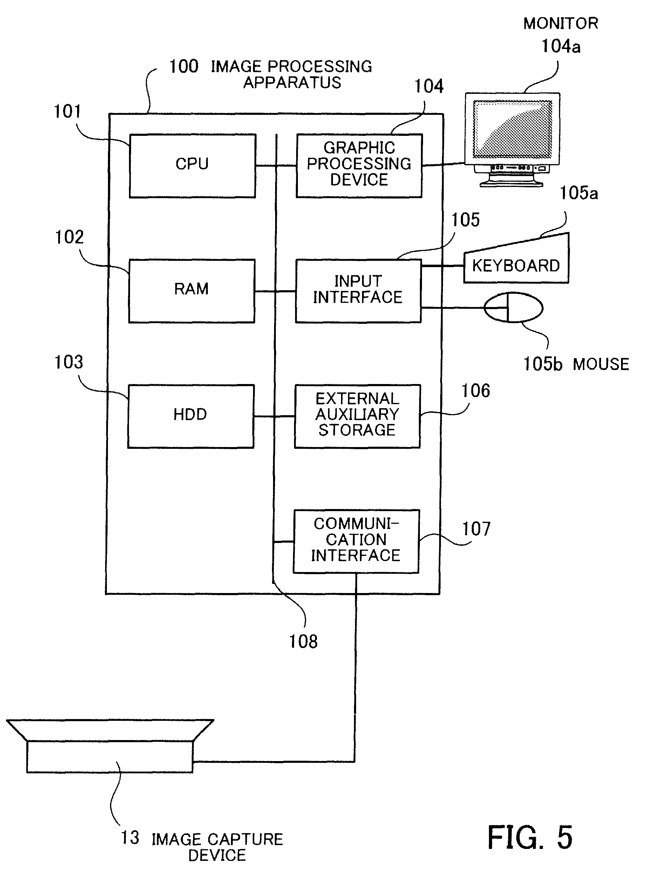

FIG. 5 illustrates an exemplary hardware construction of the image processing apparatus 100. The entire image processing apparatus 100 is controlled by a CPU (central processing unit) 101, to which a RAM (random access memory) 102, an HDD (hard disk drive) 103, a graphic processing device 104, an input interface 105, an external auxiliary storage 106, and a communication interface 107 are connected through a bus 108.

The RAM 102 temporarily stores at least portions of an OS (operating system) program and application programs which are executed by the CPU 101, as well as various types of data necessary for processing by the CPU 101. The HDD 103 stores program files.

A monitor 104a is connected to the graphic processing device 104, which makes the monitor 104a display an image on a screen in accordance with an instruction from the CPU 101. for example, the displayed image may be the image captured by the image capture device 13. A keyboard 105a and a mouse 105b are connected to the input interface 105, which transmits signals sent from the keyboard 105a and the mouse 105b, to the CPU 101 through the bus 108.

The external auxiliary storage 106 is provided for reading information from a recording medium, and writing information in a recording medium. The recording medium may be a magnetic recording device, an optical disk, an optical magnetic recording medium, a semiconductor memory, or the like. The magnetic recording device may be a hard disk drive (HDD), a flexible disk (FD), a magnetic tape (MT), or the like. The optical disk may be a DVD (Digital Versatile Disk), a DVD-RAM (Random Access Memory), a CD-ROM (Compact Disk Read Only Memory), a CD-R (Recordable)/RW (ReWritabie), or the like. The optical magnetic recording medium may be an MO (Magneto-Optical Disk) or the like.

The communication interface 107 is connected to the image capture device 13, so that the image processing apparatus 100 can acquire data relating to radiographic images from the image capture device 13. The data relating to radiographic images include the radiographic images of the structure 20 subject to testing which are captured by the image capture device 13, and attribute information for positioning the structure 20 subject to testing.

By using the above hardware construction, it is possible to realize the processing functions of the present embodiment.

### 2.6 Functions of Image processing Apparatus

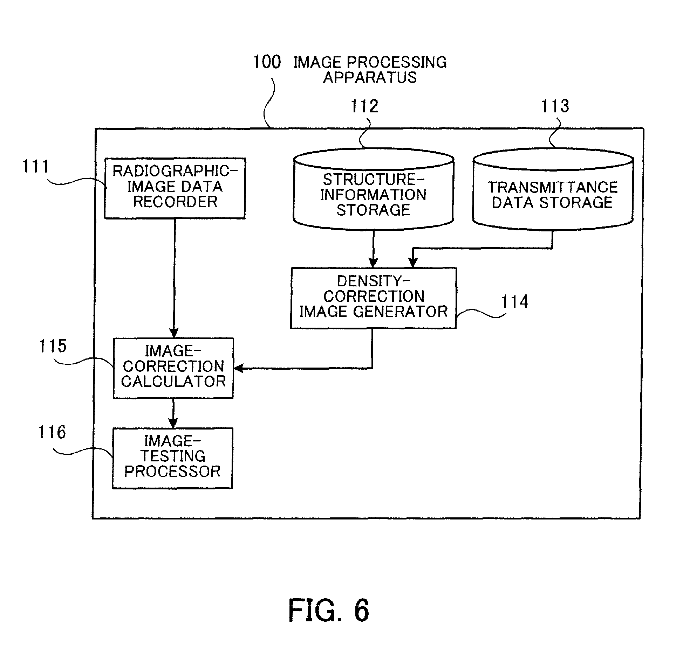

FIG. 6 is a block diagram illustrating the functions of the image processing apparatus 100. The image processing apparatus 100 comprises a radiographic-image data recorder 111, a structure-information storage 112, a transmittance data storage 113, a density-correction image generator 114, an image-correction calculator 115, and an image-testing processor 116.

### 2.6.1 Data Relating to Radiographic Images

The radiographic-image data recorder 111 records the data relating to radiographic images acquired by the communication interface 107. As explained before, the data relating to radiographic images include the attribute information for positioning the structure 20 subject to testing. The attribute information can be acquired from the conditions of radiography and the structure information on the structure 20 subject to testing. For example, the attribute information includes:
(1) information on the X-, Y-, Z-, and θ-coordinates of the position of the stage;
(2) information on the resolution represented by the projection magnification of the image or the dimensions corresponding to each pixel;
(3) information on the conditions of radiography including the voltage and current of the X-ray tube and the correction values for the contrast and the brightness;
(4) information on the X-, Y-, and Z-coordinates in the image of the structure 20 subject to testing;
(5) information on the coordinates of one or more test points (e.g., the position of the solder bump) in the structure 20 subject to testing; and
(6) values set for correction of the intensity of the image.

The Information on the X-, Y-, Z-, and θ-coordinates of the position of the stage can be acquired from the control information for controlling the stage 12. The Information on the resolution (the projection magnification of the image or the dimensions corresponding to each pixel) can be acquired from the conditions of radiography in the radiography apparatus 10. For example, the projection magnification is determined by the distance from the X-ray source 11 to the stage 12 along the Z-axis. The dimensions corresponding to each pixel can be obtained on the basis of the captured image and the projection magnification. The Information on the X-, Y-, and Z-coordinates in the image of the structure 20 includes information based on mounting data (e.g., the types, positions, and orientations of components mounted on the printed board 21a), and can be obtained, for example, on the basis of design data in the three-dimensional CAD (computer aided design). In addition, the information on the conditions of radiography and the values set for correction of the intensity of the image are included in the attribute information as information determining the relationship between the gray scale levels and the X-ray transmission characteristics.

### 2.6.2 Other Information

The structure-information storage 112 stores the structure information on the structure 20 subject to testing. For example, the structure information includes the material characteristics, dimensions, thicknesses, and the like of the respective portions of the structure 20 subject to testing.

The transmittance data storage 113 stores X-ray transmittance data, which are prepared in advance for each of the materials used in the structure 20 subject to testing. Preferably, the X-ray transmittance data include:
(1) the X-ray transmission characteristics depending on the voltage and current of the X-ray tube (i.e., data of the calibration curve of the X-ray transmittance depending on the wavelengths and the intensity of the X-rays);
(2) values of the density calculated (in consideration of calibration based on actually measured values) on the basis of the absorption coefficient of the material of each portion of the structure 20 in the case where the material is constituted by a single element (e.g., a single metal element); and
(3) data of calibration curves indicating X-ray transmittances (per unit thickness) of one or more composite materials of which one or more portions of the structure 20 are respectively constituted, based on actual measurement using test pieces or the like.

### 2.6.3 Density-correction Image Generator

The density-correction image generator 114 generates correction-image information for correcting the radiographic image density corresponding to a portion, impeding the examination and judgment, of the structure 20 subject to testing, for example, when the density-correction image generator 114 receives from the image-correction calculator 115 a request for generation of the correction-image information. The correction-image information is information on the transmission densities of one or more members of the structure 20 which impede the examination and judgment (i.e., one or more members of which the influence of the transmission density is to be removed), in a region in which the one or more stacked members are stacked (i.e., a member overlapping region). For examples, in the second substrate 22, the silicon substrate 22a, the Cu post electrode 22b, and the resin coating 22c are members of which the influence of the transmission density is to be removed.

The correction-image information is generated on the basis of the structure information on the structure 20 subject to testing stored in the structure-information storage 112 and the X-ray transmittance data stored in the transmittance data storage 113. Specifically, the density-correction image generator 114 obtains a value of the X-ray transmittance of each of the one or more members of which the influence of the transmission density is to be removed, by referring to the structure information on the structure 20 for the material and the thickness of each of the one or more members, and referring to the X-ray transmittance data corresponding to the material of each of the one or more members. Then, the density-correction image generator 114 converts the obtained value of the X-ray transmittance into a gradation value indicating the transmission density. For example, the density-correction image generator 114 obtains the gradation value of 200 for the Cu post electrode 22b, and can similarly obtain the gradation values for the substrate land pattern 21b, the silicon substrate 22a, and the resin coating 22c. However, in the case where one or more portions of the structure 20 (e.g., the silicon substrate 22a, the resin coating 22c, and the like) are considered to produce a small influence on the examination and judgment when the density images of the one or more portions of the structure 20 overlap the density image of the solder bump 23, the operations for obtaining the gradation values for the one or more portions can be dispensed with. It is possible to preset a reference (e.g., a threshold) for determining whether or not the influence on the examination of the solder bump 23 is small. Further, the gradation value of the background (the region other than the regions corresponding to the specific portions) in the density-correction image may be considered to correspond to zero transmission density and the maximum intensity of 255 in the density-correction image. The density-correction image generator 114 may read out the structure information on the structure 20 subject to testing, converts the gradation values on the basis of the conditions of radiography including the voltage and current of the X-ray tube and the correction values for the contrast and the brightness, and generate the density-correction image with the converted gradation values and a resolution equivalent to or higher than the resolution of the radiographic image to be corrected. Finally, the density-correction image generator 114 completes the generation of the correction-image information by attaching, to the density-correction image, dimension information indicating dimensions of the one or more members of which the influence of the transmission density is to be removed.

### 2.6.4 Image-correction Calculator

The image-correction calculator 115 performs bit-by-bit calculation for correction of the radiographic image (stored in the radiographic-image data recorder 111) by using the density-correction image (generated by the density-correction image generator 114) as explained in detail below.

In the processing performed by the image-correction calculator 115, the position of the density-correction image is aligned with the position of the radiographic image (stored in the radiographic-image data recorder 111) so that density changes in the density-correction image match the corresponding density changes in the radiographic image. The alignment is achieved, for example, by combining the dimension information included in the correction-image information with the aforementioned information on the coordinates of the position of the stage (which is included in the attribute information for positioning the structure 20 subject to testing) in consideration of the projection magnification in the conditions of radiography and information on the field of view. In the processing for the alignment, first, the position of the structure 20 on the stage 12 is recognized, for example, by an initial positioning operation performed when the structure 20 is placed in the radiography apparatus 10. Then, coordinates for use in testing are determined by combining the local coordinate system of the structure 20 with the coordinate system of the stage 12 in the radiography apparatus 10. When the position of the structure 20 placed on the stage 12 is determined as above, it is possible to control the alignment with the density-correction image by reference to the information on the coordinates of the position of the stage 12 and the information on the coordinates in the image of the structure 20. In addition, when the coordinates of a plurality of specific points (for example, indicating the position of the solder bump 23) in the structure 20 are set as the test points, it is possible to control the alignment with the desired coordinates on the density-correction image. In accordance with the above information, the image-correction calculator 115 superimposes a part of the density-correction image corresponding to the one or more members of which the influence of the transmission density is to be removed, on a part of the radiographic image covering a portion (object) to be examined (e.g., the solder bump 23) in the structure 20.

In the case where the radiography is performed by using as a viewing coordinate system a projected coordinate system associated with the radiographic system, it is preferable to use the three-dimensional spatial coordinates in the attribute information. The radiographic image has more perspective characteristics when the projection magnification of the radiographic image is increased. Therefore, the precision in fitting between the coordinate data and the position in the radiographic image of the structure 20 subject to testing is increased by performing calculation for perspective projection by use of the three-dimensional coordinate information.

When the processing for alignment is completed, the density-correction image is finely adjusted by magnifying or reducing the density-correction image so that the size of the part of the radiographic image covering the one or more members of which the influence of the transmission density is to be removed matches the size of the part of the density-correction image corresponding to the one or more members of which the influence of the transmission density is to be removed.

As explained before, the gradation value of each pixel of the radiographic image is recorded in a gray-scale level. Therefore, for example, in the case where the minimum gradation value corresponds to black, and the maximum gradation value corresponds to white, the density-correction image may be inverted (into a negative) so that the part of the density-correction image corresponding to the one or more members of which the influence of the transmission density is to be removed have non-zero gradation values, and the other part of the density-correction image have zero gradation values.

Thereafter, the image-correction calculator 115 removes from the radiographic image the influence of the one or more members (of which the influence of the transmission density is to be removed). Specifically, in the case where the one or more members increase the density in the corresponding part of the radiographic image, the image-correction calculator 115 performs calculation for subtracting the gradation values in the density-correction image from the gradation values in the part of the radiographic image covering the one or more members (of which the influence of the transmission density is to be removed). For example, in the example of FIG. 3, the transmission densities of the silicon substrate 22a, the Cu post electrode 22b, and the resin coating 22c increase the density of the radiographic image. In addition, in the first substrate 21, the printed board 21a, the substrate land pattern 21b, and the solder resist 21c are members of which the influence of the transmission density is to be removed. Specifically, as illustrated in FIG. 3, the transmission densities of the printed board 21a, the substrate land pattern 21b, and the solder resist 21c increase the density of the radiographic image.

On the other hand, in the case where one of the one or more members (of which the influence of the transmission density is to be removed) is arranged to make the thickness of a first part of the object to be examined the image of which overlaps the image of the one of the one or more members smaller than the thickness of a second part of the object to be examined the image of which does not overlap the image of the one of the one or more members, and the object to be examined has a greater X-ray transmittance per unit thickness than the one of the one or more members, it is possible to consider that the one of the one or more members is arranged to reduce the transmission density of the above first part of the object to be examined. Thus, in order to eliminate the above influence of the one of the one or more members in reducing the transmission density of the first part of the object to be examined, the image-correction calculator 115 adds the density of a density-correction image to the density of the radiographic image of the structure subject to testing, where the density of the density-correction image for compensating for the above influence of the one of the one or more members. In the example of FIG. 3, the substrate land pattern 21b is arranged to make the thickness of a large part of the solder bump 23 smaller than the thickness of the other part of the solder bump 23 the image of which does not overlap the image of the substrate land pattern 21b as illustrated in FIG. 3. The solder bump 23 has a greater X-ray transmittance per unit thickness than the first substrate 21. Therefore, the transmission density of the large part of the solder bump 23 is smaller than the transmission density of the other part of the solder bump 23 the image of which does not overlap the image of the substrate land pattern 21b. That is, it is possible to consider that the substrate land pattern 21b is arranged to reduce the transmission density of the above large part of the solder bump 23. Thus, in order to eliminate the above influence of the substrate land pattern 21b in reducing the transmission density of the above large part of the solder bump 23, the image-correction calculator 115 adds the density of a density-correction image to the density of the radiographic image of the structure 20 subject to testing, where the density of the density-correction image for compensating for the above influence of the substrate land pattern 21b.

### 2.6.5 Image-testing Processor

The image-testing processor 116 performs detection and judgment by adjusting the degree of smoothing of the variations in the gradation values in the corrected radiographic image. For example, in the case where a radiographic image is captured for detecting a void in a WLCSP structure in a detection mode for detection of a BGA void, the image-testing processor 116 detects a local region having low density (having great gradation values equal to or higher than a first predetermined level) in a part, having high density (having small gradation values equal to or lower than a second predetermined level), of the radiographic image corresponding to the BGA bump. The degree of smoothing can be determined on the basis of whether or not a density edge or step in a BGA bump produced by differentiation processing disappears. When the detected local region is within the part of the radiographic image corresponding to the BGA bump, and the number of pixels constituting the detected local region is within a predetermined range, the image-testing processor 116 determines the detected local region having low density to be a void. When the contour of a void which cannot be recognized on the radiographic image before the correction is normally detected, it is possible to determine that the radiographic image is appropriately corrected.

### 2.7 Generation of Information on Density-correction Image

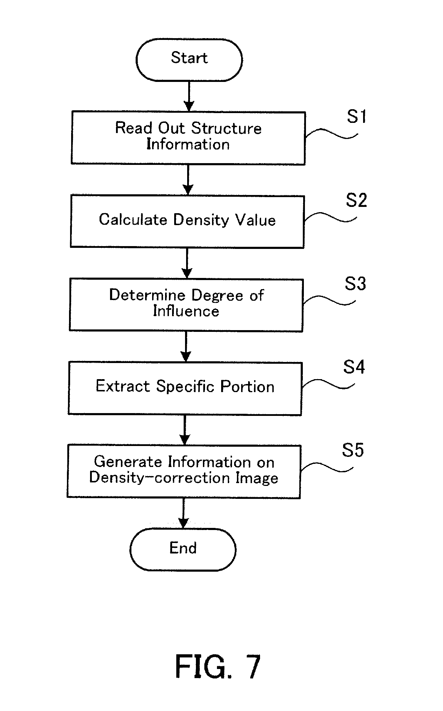

Next, a flow of processing for generating the correction-image information by the density-correction image generator 114 is explained below with reference to FIG. 7, which is a flow diagram indicating a sequence of the processing.

First, in step S1, the density-correction image generator 114 reads out from the structure-information storage 112 the structure information including the material characteristic, position, dimensions, thickness, and the like of each portion of the structure 20 subject to testing.

In step S2, the density-correction image generator 114 reads out from the transmittance data storage 113 the X-ray transmittance of each portion of the structure 20 subject to testing. Then, the density-correction image generator 114 calculates the gradation value indicating the density of each portion of the structure 20, on the basis of the position, dimensions, and thickness which are read out in step S1, in the manner explained before.

In step S3, the density-correction image generator 114 determines the degree of influence of the density indicated by the gradation value obtained in step S2, on the variations in the densities of the structure 20 subject to testing.

In step S4, the density-correction image generator 114 extracts as a specific portion each portion of the structure 20 when the degree of influence of the portion on the variations in the densities of the structure 20 is equal to greater than a predetermined threshold.

In step S5, the density-correction image generator 114 generates a density-correction image of the extracted portion of the structure 20 according to the conditions of radiography. Then, the density-correction image generator 114 generates the correction-image information by attaching, to the density-correction image, dimension information indicating the dimensions of each portion of which the influence is to be removed. Thereafter, the processing of FIG. 7 is completed.

### 2.8 Correction and Judgment

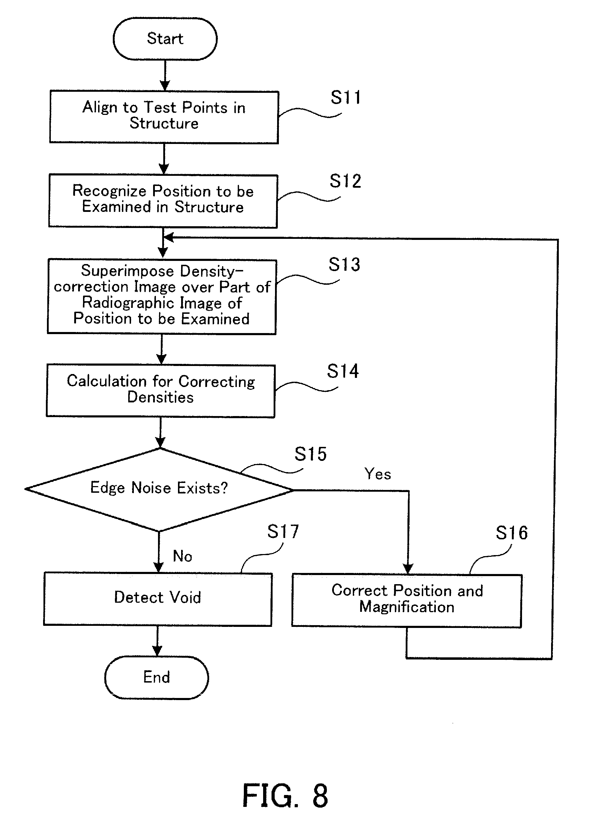

Next, a flow of processing for performed by the image-correction calculator 115 and the image-testing processor 116 beginning from the alignment of the density-correction image to the void detection is explained below with reference to FIG. 8, which is a flow diagram indicating a sequence of the processing.

First, in step S11, an operation to alignment to one or more test points in the structure 20 subject to testing is performed while the structure 20 is irradiated by X-rays emitted from the X-ray source 11 in the radiography apparatus 10. After the alignment, data relating to a radiographic image captured by the image capture device 13 (containing the radiographic image and attribute information) is recorded in the radiographic-image data recorder 111.

In step S12, the image-correction calculator 115 recognizes the position of the portion (object) to be examined in the structure 20 subject to testing, in the radiographic image contained in the data relating to the radiographic image stored in the radiographic-image data recorder 111.

In step S13, the image-correction calculator 115 requests the density-correction image generator 114 to generate correction-image information containing a density-correction image. Then, the image-correction calculator 115 superimposes the generated density-correction image over a part of the radiographic image corresponding to the portion (object) to be examined, and finely adjusts the position of the density-correction image.

In step S14, the image-correction calculator 115 performs calculation for correcting the density. Specifically, the image-correction calculator 115 subtracts the amount of transmission density increased by each portion of which the influence is to be removed, from the part of the radiographic image over which the density-correction image is superimposed. In the case where one of the one or more members (of which the influence of the transmission density is to be removed) is arranged to make the thickness of a first part of the object to be examined the image of which overlaps the image of the one of the one or more members smaller than the thickness of a second part of the object to be examined the image of which does not overlap the image of the one of the one or more members, and the object to be examined has a greater X-ray transmittance per unit thickness than the one of the one or more members, the image-correction calculator 115 adds the density of a density-correction image to the density of the radiographic image of the structure subject to testing, where the density of the density-correction image for compensating for the above influence of the one of the one or more members.

In step S15, the image-correction calculator 115 determines whether or not an edge noise exists around a contour in the radiographic image after the above correction.

In the case where an edge noise exists in the corrected radiographic image (i.e., when yes is determined in step S15), in step S16, the image-correction calculator 115 corrects the superimposed position and the magnification (ratio) of the part of the density-correction image corresponding to one or more members of which the influence of the transmission density is to be removed, with respect to the part of the radiographic image covering the one or more members. Thereafter, the operation goes to step S13, and the operations in step S13 and the following steps are repeated. On the other hand, in the case where no edge noise exists in the corrected radiographic image (i.e., when no is determined in step S15), in step S17, the image-testing processor 116 performs processing for detecting a void. Thereafter, the processing of FIG. 8 is completed.

In particular, in some cases where the magnification is high, even a slight displacement cannot be ignored in the alignment and superimposition of the density-correction image with and over the radiographic image from the viewpoint of density correction. However, it is possible to improve the detection precision by checking whether or not an edge noise occurs around a contour in the radiographic image over which the density-correction image is superimposed, and finely adjusting the position and the magnification (ratio) of the density-correction image so as to make the superimposition appropriate.

### 3. Concrete Example

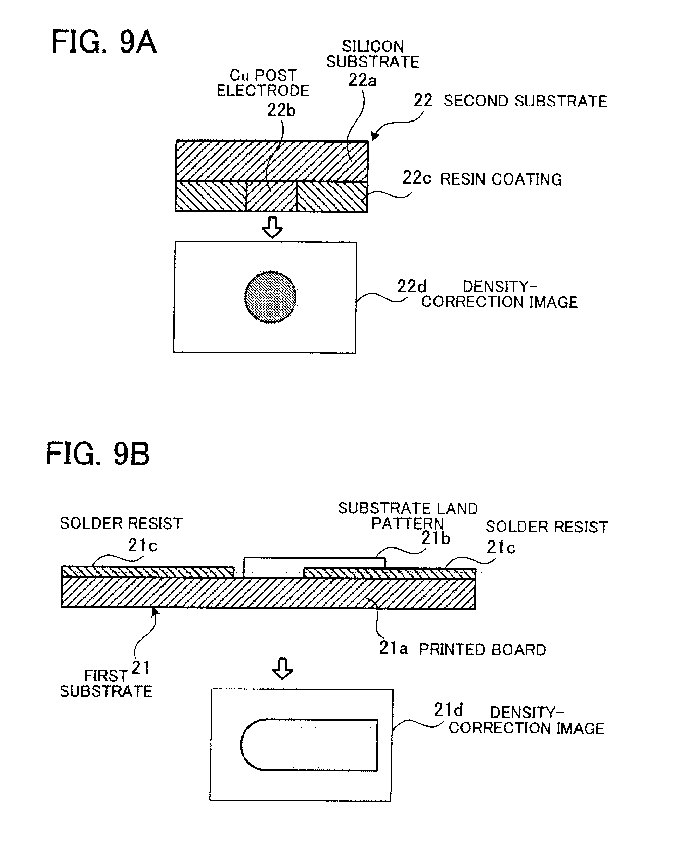

A concrete example of processing for radiography of the structure 20 subject to testing is explained below. FIGS. 9A and 9B schematically illustrate production of density-correction images in the concrete example.

The density-correction image generator 114 obtains the gradation values indicating the densities of the silicon substrate 22a, the Cu post electrode 22b, and the resin coating 22c in response to a request from the image-correction calculator 115, and determines the degree of influence of the density indicated by the obtained gradation values on the density of the part, covering the solder bump 23, of the radiographic image. In this example, the differences of the gradation values produced by the silicon substrate 22a and the resin coating 22c from the gradation value of the background is below a predetermined threshold. Therefore, the gradation values of the silicon substrate 22a and the resin coating 22c are not extracted. As illustrated in FIG. 9A, the density-correction image 22d having gradation values indicating the density of only the Cu post electrode 22b is extracted. In addition, the density-correction image 22d is determined, on the basis of the structure information, to be an image which increases the densities of the part of the radiographic image covering the portion to be examined. The density-correction image 22d may be extracted from a radiographic image of only the second substrate 22, or produced on the basis of CAD data.

Further, the density-correction image generator 114 obtains the gradation values indicating the densities of the printed board 21a, the substrate land pattern 21b, and the solder resist 21c, and determines the degree of influence of the density indicated by the obtained gradation values on the density of the part, covering the solder bump 23, of the radiographic image. In this example, the differences of the densities produced by the printed board 21a and the solder resist 21c from the density of the background is below the predetermined threshold. Therefore, the densities of the printed board 21a and the solder resist 21c are not extracted. As illustrated in FIG. 9B, the density-correction image 21d having the density produced by only the substrate land pattern 21b is extracted. As explained before, it is possible to determine, on the basis of the structure information, that the substrate land pattern 21b is arranged to reduce the transmission density of the above large part of the solder bump 23. In addition, the density-correction image 21d corresponding to the substrate land pattern 21b may be determined, on the basis of the structure information, to be an image which has a density smaller than the density-correction image corresponding to the solder resist 21c. The density-correction image 21d may be extracted from a radiographic image of only the first substrate 21, or produced on the basis of CAD data.

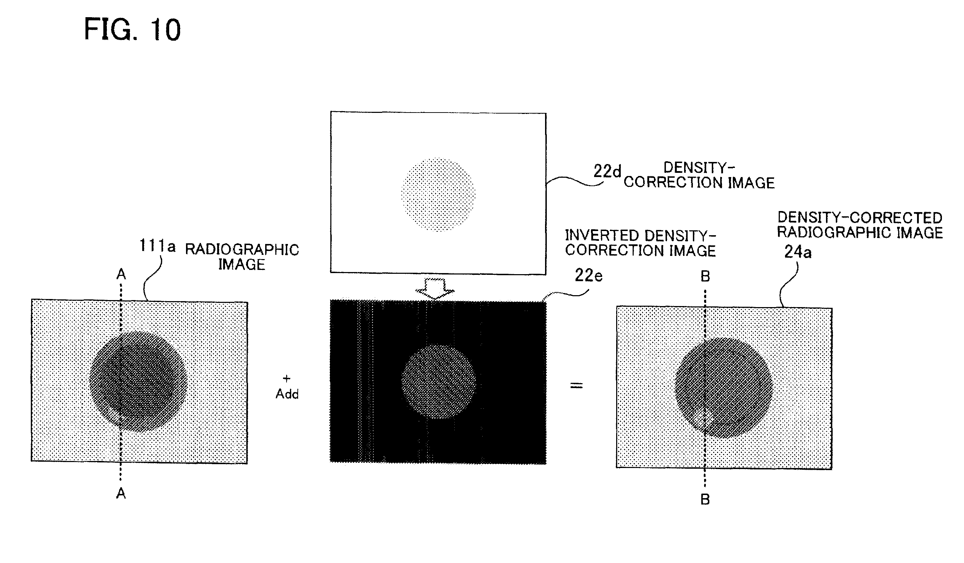

FIG. 10 illustrates an example of density correction in the concrete example. The region of the radiographic image 111a corresponding to a void includes a first part in which the image of the Cu post electrode 22b is overlapped and a second part in which the image of the Cu post electrode 22b is not overlapped, so that the first and second parts have different densities, i.e., a change in the density occurs between roughly two levels of density. In the case where a change in the density occurs in the region of the radiographic image 111a corresponding to the void, it becomes more probable that a void cannot be detected by thresholding for contour detection and judgment about a void.

In consideration of the above situation, the processing for density subtraction is performed. Specifically, the image-correction calculator 115 inverts the density-correction image 22d (extracted by the density-correction image generator 114) into a negative, and adds the inverted density-correction image 22d to the radiographic image 111a on a bit-by-bit basis. At this time, superimposition is performed as mentioned before by using information on the positions of the above the radiographic image 111a and the inverted density-correction image 22d. Thus, a density-corrected radiographic image 24a is obtained by the processing for the density subtraction. In the density-corrected radiographic image 24a, edges in the density distribution located around the contour of the Cu post electrode 22b are smoothed. Therefore, when the image-testing processor 116 uses the density-corrected radiographic image 24a in the processing for void detection, omission can be suppressed in the void detection. Although not illustrated in the example of FIG. 10, further, the image-correction calculator 115 may invert the density-correction image 21d into a negative, and add the inverted density-correction image 21d to the radiographic image 111a or the density-corrected radiographic image 24a on a bit-by-bit basis.

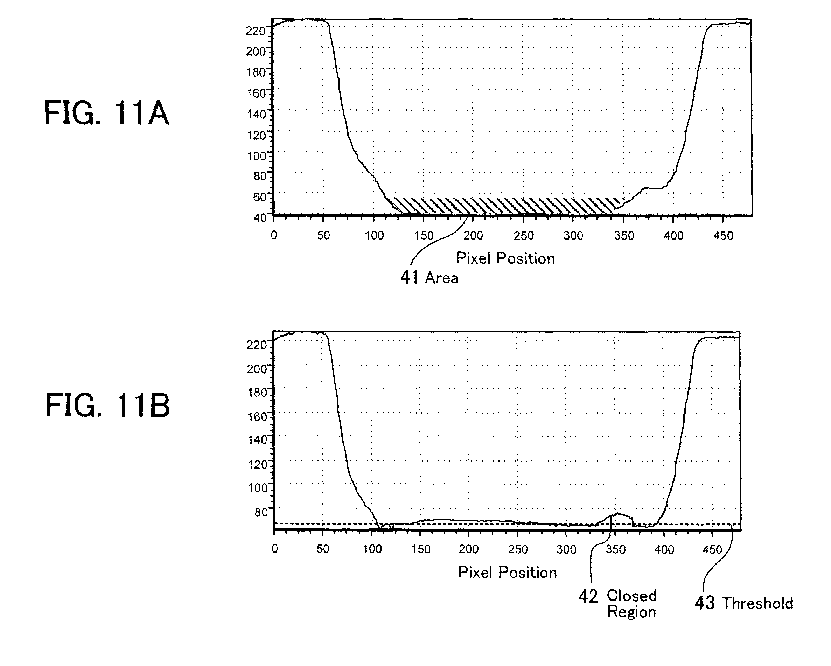

The density distribution in the radiographic image 111a and the density distribution in the density-corrected radiographic image 24a are compared below. FIG. 11A is a graph indicating a one-dimensional density distribution along the line A-A' (indicated in FIG. 10) passing through a part of the radiographic image 111a corresponding to a void, and FIG. 11B is a graph indicating a one-dimensional density distribution along the line B-B' (indicated in FIG. 10) passing through a part of the density-corrected radiographic image 24a corresponding to the void. In each of FIGS. 11A and 11B, the abscissa indicates the pixel position along the line, and the ordinate indicates a gradation value (0 to 255) corresponding to the intensity of each pixel. The ordinate values in FIGS. 11A and 11B decrease with increase in the density of each pixel in the radiographic image 111a and the density-corrected radiographic image 24a. As illustrated in FIGS. 11A and 11B, the ordinate values are great in the background regions of the radiographic image 111a and the density-corrected radiographic image 24a, and small in the regions corresponding to the solder bump 23.

In FIG. 11A, the hatched area 41 corresponds to the increase in the gradation values of the radiographic image 111a corresponding to the transmission density of the Cu post electrode 22b. That is, the ordinate values of the radiographic image 111a are reduced by the influence of the Cu post electrode 22b to approximately 40. Therefore, there is a possibility that the closed region corresponding to the void 23a in which the density is relatively low (i.e., the gradation values are relatively great in FIG. 11A) cannot be detected in the density distribution in the radiographic image 111a. Therefore, the void may not be able to be detected by thresholding of the radiographic image 111a. On the other hand, as illustrated in FIG. 11B, the gradation values of the density-corrected radiographic image 24a are increased by approximately 20 for compensating for the density increase (i.e., the corresponding decrease in the gradation values) caused by the transmission density of the Cu post electrode 22b (as a specific portion). Therefore, the closed region 42 corresponding to the void 23a, which is buried in the radiographic image 111a, is revealed in the density-corrected radiographic image 24a. The gradation values in the closed region 42 are smaller than the threshold density 43. Thus, the void can be detected by thresholding of the density-corrected radiographic image 24a.

Since the above processing for density correction is two-dimensionally performed on the radiographic image, the void can also be detected by using other image processing techniques such as the edge detection in density variations (e.g., differentiation processing), instead of the thresholding, in the case where the difference in the density between the closed region corresponding to the void and the surrounding region is revealed.

As explained above, the image processing apparatus 100 generates, on the basis of the structure information, the density-correction image 22d corresponding to a portion having an influence on void detection (e.g., the Cu post electrode 22b), for the part of the radiographic image 111a in which the image of the portion having an influence on void detection overlaps the image of the solder bump 23. Then, the image processing apparatus 100 performs calculation using the generated density-correction image so as to cancel density changes in the radiographic image 111a which has an influence on the void detection. Therefore, the density of the region, corresponding to the void, in the density-corrected radiographic image 24a obtained by the image processing apparatus 100 is lower than the density of the region, corresponding to the void, in the radiographic image 111a, although the region corresponding to the void has relatively low density in the radiographic image 111a. That is, the radiographic image 111a is corrected so that the contour of the void is enhanced.

### 4. Advantages

Even in the case where the image of a void is located at a position overlapping the contour of the Cu post electrode 22b, errors in detection of the void existing in the solder bump 23 can be suppressed, so that the detection rate in the void test performed by the image-testing processor 116 is increased. Therefore, additional testing operations (such as a visual test) can be dispensed with.

In addition, since the calculation is performed after the alignment, variations in the density having an influence on the void detection can be removed with higher reliability.

### 5. Variations

Although, in the explained example, the Cu post electrode 22b is extracted as an object for which the calculation for density correction is performed, and the influence of the extracted object is removed, the disclosed technique is not limited to such an example, and can also be applied to the cases in which the shadow of a land, a wiring pattern, or the like of the printed board 21a is extracted for removing the influence of the shadow. Further, as explained before, even in the case where a plurality of components are stacked, the influence of the stacked components can also be removed.

The operations performed by the image processing apparatus 100 may be performed by a plurality of devices in a distributed manner. For example, the operations may be performed by one device until the generation of the correction-image information, and the calculation for image correction and the processing for examination and judgment on the corrected image may be performed by another device by use of the density-correction image and the data relating to a radiographic image.

Although the radiography apparatus 10 and the image processing apparatus 100 are separately arranged in the second embodiment, the radiography apparatus 10 and the image processing apparatus 100 may be arranged in a single apparatus.

The disclosed operations of the image processing apparatus 100 may be performed in a testing stage after manufacture of the structure 20 (to be examined), or in a stage during a process for manufacturing the structure 20.

Although, in the second embodiment, the density-correction image generator 114 determines whether or not a change in the density exists, the determination may be made by the image-correction calculator 115.

### 6. Recording Medium Storing Program

The processing functions according to the embodiments explained above can be realized by a computer. In this case, a program describing details of processing for realizing the functions which each of the image processing apparatus 100 should have is provided. When a computer executes the program, the processing functions of one of the image processing apparatus can be realized on the computer.

The program describing the details of the processing can be stored in a recording medium which can be read by the computer. The recording medium may be a magnetic recording device, an optical disk, an optical magnetic recording medium, a semiconductor memory, or the like. The magnetic recording device may be a hard disk drive (HDD), a flexible disk (FD), a magnetic tape, or the like. The optical disk may be a DVD (Digital Versatile Disk), a DVD-RAM (Random Access Memory), a CD-ROM (Compact Disk-Read Only Memory), a CD-R (Recordable)/RW (ReWritable), or the like. The optical magnetic recording medium may be an MO (Magneto-Optical Disk) or the like.

In order to put the program into the market, for example, it is possible to sell a portable recording medium such as a DVD or a CD-ROM in which the program is recorded. Alternatively, it is possible to store the program in a storage device belonging to a server computer, and transfer the program to another computer through a network.

The computer which should execute the program stores the program in a storage device belonging to the computer, where the program is originally recorded in, for example, a portable recording medium, or is initially transferred from the server computer. The computer reads the program from the storage device, and performs processing in accordance with the program. Alternatively, the computer may directly read the program from the portable recording medium for performing processing in accordance with the program. Further alternatively, the computer can sequentially execute processing in accordance with each portion of the program every time the portion of the program is transferred from the server computer.

### 7. Additional Matters

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although certain embodiment(s) of the present invention have been described in detail, it should be understood that the various changes, substitutions and alterations could be made without departing from the scope of the invention.

Specifically, each element constituting the explained embodiments may be replaced with another element having a similar function, and any further element or any further step may be added to the explained embodiments. Further, it is possible to arbitrarily combine two or more of the features of the explained embodiments explained before.

## Claims

1. A computer-readable medium which stores an image processing program to be executed by a computer, said image processing program realizes in the computer:
an image generation unit which generates, for a radiographic image of a structure constituted by a plurality of members being stacked and including an object to be examined, a density-correction image representing an influence of a transmission density of each of the plurality of members other than the object to be examined, on the basis of structure information on the plurality of members; and
a removal unit which removes said influence of the transmission density of said each of the plurality of members other than the object to be examined, from at least a part of said radiographic image in which images of the plurality of members overlap, by using the density-correction image generated by said image generation unit.

2. An apparatus for image processing comprising:
an image generation unit which generates, for a radiographic image of a structure constituted by a plurality of members being stacked and including an object to be examined, a density-correction image representing an influence of a transmission density of each of the plurality of members other than the object to be examined, on the basis of structure information on the plurality of members; and
a removal unit which removes said influence of the transmission density of said each of the plurality of members other than the object to be examined, from at least a part of said radiographic image in which images of the plurality of members overlap, by using the density-correction image generated by said image generation unit.

3. The computer-readable medium according to claim 1, or the apparatus according to claim 2, wherein said image generation unit calculates said transmission density on the basis of a thickness and a material characteristic of said each of the plurality of members other than the object to be examined, and the thickness and material characteristic are included in said structure information.

4. The computer-readable medium as claimed in claim 1 or 3, or the apparatus as claimed in claim 2 or 3, wherein said removal unit subtracts first gradation values constituting said density-correction image from second gradation values constituting said radiographic image in the case where said influence of the transmission density of said each of the plurality of members other than the object to be examined increases the second gradation values.

5. The computer-readable medium as claimed in claim 1, 3 or 4, or the apparatus as claimed in claim 2, 3 or 4, wherein in the case where one of said plurality of members other than the object to be examined is arranged to make a thickness of a first part of the object to be examined smaller than a thickness of a second part of the object to be examined, and the object to be examined has a greater X-ray transmittance per unit thickness than the one of said plurality of members, said removal unit adds first gradation values constituting said density-correction image to second gradation values constituting said radiographic image.

6. The computer-readable medium as claimed in any one of claims 1 or 3-5, or the apparatus as claimed in any one of claims 2-5, wherein said removal unit performs processing for superimposing a part of said density-correction image on which an image of said each of the plurality of members other than the object to be examined is projected, over a part of said radiographic image on which an image of the object to be examined is projected, on the basis of information on a position of the object to be examined and information on dimensions of said each of the plurality of members other than the object to be examined.

7. The computer-readable medium as claimed in claim 6, or the apparatus as claimed in claim 6, wherein said removal unit adjusts dimensions of said part of the density-correction image so that the dimensions of the part of the density-correction image matches dimensions of said part of the radiographic image.

8. The computer-readable medium as claimed in any one of claims 1 or 3-7, or the apparatus as claimed in any one of claims 2-7, wherein said removal unit removes the influence of the transmission density of said each of the plurality of members other than the object to be examined, from said radiographic image, only in the case where the transmission density of said each of the plurality of members other than the object to be examined is equal to or greater than a predetermined threshold.

9. A process for image processing, comprising:
generating, for a radiographic image of a structure constituted by a plurality of members being stacked and including an object to be examined, a density-correction image representing an influence of a transmission density of each of the plurality of members other than the object to be examined, on the basis of structure information on the plurality of members; and
removing said influence of the transmission density of said each of the plurality of members other than the object to be examined, from at least a part of said radiographic image in which images of the plurality of members overlap, by using the density-correction image generated by said image generation unit.

10. The process as claimed in claim 9, wherein generating the density-correction image involves calculating said transmission density on the basis of a thickness and a material characteristic of said each of the plurality of members other than the object to be examined, where the thickness and material characteristic are included in said structure information.

11. The process as claimed in claim 9 or 10, wherein removing said influence of the transmission density involves subtracting first gradation values constituting said density-correction image from second gradation values constituting said radiographic image in the case where said influence of the transmission density of said each of the plurality of members other than the object to be examined increases the second gradation values.

12. The process as claimed in any one of claims 9-11, wherein in the case where one of said plurality of members other than the object to be examined is arranged to make a thickness of a first part of the object to be examined smaller than a thickness of a second part of the object to be examined, and the object to be examined has a greater X-ray transmittance per unit thickness than the one of said plurality of members, removing said influence of the transmission density involves adding first gradation values constituting said density-correction image to second gradation values constituting said radiographic image.

13. The process as claimed in any one of claims 9-12, wherein removing said influence of the transmission density involves superimposing a part of said density-correction image on which an image of said each of the plurality of members other than the object to be examined is projected, over a part of said radiographic image on which an image of the object to be examined is projected, on the basis of information on a position of the object to be examined and information on dimensions of said each of the plurality of members other than the object to be examined.

14. The process as claimed in claim 13, wherein removing said influence of the transmission density further involves adjusting dimensions of said part of the density-correction image so that the dimensions of the part of the density-correction image matches dimensions of said part of the radiographic image.

15. A process as claimed in any one of claims 9-14, comprising removing the influence of the transmission density of said each of the plurality of members other than the object to be examined, from said radiographic image, only in the case where the transmission density of said each of the plurality of members other than the object to be examined is equal to or greater than a predetermined threshold.
